# EUROPÄISCHE PATENTANMELDUNG

(11) **EP 2 218 664 A2**
(43) Veröffentlichungstag der Anmeldung: **18.08.2010**
(21) Anmeldenummer: 10151876.9
(22) Anmeldetag: 28.01.2010
(51) Int. Cl.: B65G 47/68

(54) **Förderer und Verfahren zum Beschicken einer Weiterverarbeitungseinheit mit Artikeln unterschiedlicher Artikeltypen**

(30) Priorität: 12.02.2009 DE 102009003475
(71) Anmelder: Krones AG, 93073 Neutraubling (DE)
(72) Erfinder: Rausch, Karl, 55469 Simmern (DE); Mayer, Josef, 83209, Prien am Chiemsee (DE); Schmidt, Bruno, 83109, Großkarolinenfeld (DE)
(74) Vertreter: Reichert, Werner Franz

(57) **Zusammenfassung**

Es sind ein Förderer (1) und ein Verfahren zum Beschicken einer Weiterverarbeitungseinheit (2) mit Artikeln (3,4,5) mindestens zweier unterschiedlicher Artikeltypen offenbart. Der Förderer (1) umfasst eine Zuführeinheit (10) für die Artikel (3,4,5), eine der Zuführeinheit (10) nachgeordnete Ordnungszone (20) und eine der Ordnungszone (20) nachgeordnete Gassenzone (30). Die Artikel (3,4,5) sind in der Gassenzone (30) zur Weiterverarbeitungseinheit (2) geordnet geführt. Die Zuführeinheit (10) umfasst mindestens zwei Transportbänder (11,12,13), zu denen jeweils eine Transportrichtung für die Artikel (3,4,5) in einem Bereich der Ordnungszone (20) derart ausgebildet ist, dass die Transportrichtungen unter einem Winkel (ψ) zueinander angeordnet sind.

## Beschreibung

Die vorliegende Erfindung betrifft einen Förderer zum Beschicken einer Weiterverarbeitungseinheit mit Artikeln. Die vorliegende Erfindung betrifft insbesondere einen Förderer zum Beschicken einer Weiterverarbeitungseinheit mit Artikeln mindestens zweier unterschiedlicher Artikeltypen. Dabei umfasst der Förderer eine Zuführeinheit für die Artikel, eine der Zuführeinheit nachgeordnete Ordnungszone und eine der Ordnungszone nachgeordnete Gassenzone. Die Artikel sind in der Gassenzone zur Weiterverarbeitungseinheit geordnet geführt.

Die vorliegende Erfindung betrifft auch ein Verfahren zum Beschicken einer Weiterverarbeitungseinheit mit Artikeln durch einen Förderer. Die vorliegende Erfindung betrifft insbesondere ein Verfahren zum Beschicken einer Weiterverarbeitungseinheit mit Artikeln mindestens zweier unterschiedlicher Artikeltypen durch einen Förderer. Dabei werden die Artikel mit einer Zuführeinheit des Förderers zu einer Ordnungszone des Förderers und anschließend weiter zu einer Gassenzone des Förderers transportiert. Die Gassenzone führt die Artikel der Weiterverarbeitungseinheit geordnet zu.

Das deutsche Patent DE 25 41 813 C2 offenbart eine Einrichtung bzw. einen Förderer zum Ordnen von Artikeln eines einzigen Typs. Die Artikel werden auf mehreren parallelen Zuführgassen eines einzigen Transportbands zu einer Ordnungszone herangeführt. Die Artikel werden dabei von den Zuführgassen an parallele Dosiergassen mit gleicher Ausrichtung wie die Zuführgassen übergeben. Die Ordnungszone ist am Ende der Dosiergassen angeordnet und umfasst eine Seitenführung, die die Artikel in eine einzige Abfördergasse (Abförderer) am Ende der letzten Dosiergasse in einem Winkel zur Förderrichtung umlenkt.

Das deutsche Patent DE 195 30 626 B4 offenbart ein Verfahren und eine Vorrichtung zum Erfassen der Belegung eines Förderers für Artikel mit einem Stau- und/oder Umlenkbereich. Die Belegung oder Befüllung des Förderers mit Artikeln erfolgt berührungslos durch eine parallel zur Förderebene durchgeführte Abstandsmessung zwischen einem stauaufwärtsliegenden Bezugsort und dem/den hintersten Artikel(n) des gestauten Artikelstroms. Es werden nur Artikel eines einzigen Typs auf einem einzigen Transportband zu dem Stau- und/oder Umlenkbereich gefördert.

Die deutsche Patentanmeldung DE 195 14 928 A1 offenbart ein Verfahren und eine Vorrichtung zum Beschicken einer Gassenverteilung für Artikel mit einem vorgeschalteten Drängeltisch. Die Artikel werden dem Drängeltisch auf einem einzigen, rechtwinklig zum Drängeltisch angeordneten Transportband (Zuförderer) zugeführt. Dabei wird die Bewegung der Artikel vom Transportband zu den Gassen in Abhängigkeit vom Belegungszustand des Drängeltisches und/oder der Gassen aktiv gesteuert.

Aufgabe der Erfindung ist, einen Förderer zum Beschicken einer Weiterverarbeitungseinheit mit Artikeln bereit zu stellen, mit dem Artikel unterschiedlichen Typs gleichzeitig und platzsparend verarbeitbar sind.

Die obige Aufgabe wird durch einen Förderer gelöst, der die Merkmale des Patentanspruchs 1 umfasst.

Aufgabe der Erfindung ist auch, ein Verfahren zum Beschicken einer Weiterverarbeitungseinheit mit Artikeln durch einen Förderer bereit zu stellen, mit dem Artikel unterschiedlichen Typs gleichzeitig und platzsparend verarbeitet werden.

Die obige Aufgabe wird durch ein Verfahren gelöst, das die Merkmale des Patentanspruchs 15 umfasst.

Nachfolgend werden der erfindungsgemäße Förderer und das erfindungsgemäße Verfahren beschrieben.

Der Förderer zum Beschicken einer Weiterverarbeitungseinheit mit Artikeln, beispielweise Flüssigkeitsbehältern, umfasst eine Zuführeinheit für die Artikel mit mindestens zwei Transportbändern. Den Transportbändern der Zuführeinheit ist eine gemeinsame Ordnungszone nachgeordnet, auf der die von den Transportbändern zugeführten Artikel geordnet werden. Zu jedem Transportband ist jeweils eine Transportrichtung für die Artikel in zumindest einem Bereich der Ordnungszone derart ausgebildet, dass die Transportrichtungen unter einem Winkel zueinander angeordnet sind.

Die Weiterverarbeitungseinheit kann eine Packmaschine zur Herstellung von Gebinden aus den zugeführten Artikeln oder ein Palettierer für die Artikel sein.

Die Transportbänder können jeweils mit Artikeln unterschiedlichen Typs bestückt werden, so dass mit der Packmaschine Mischgebinde aus den Artikeln der unterschiedlichen Artikeltypen bzw. mit dem Palettierer Mischpalettenlagen aus Artikeln der unterschiedlichen Artikeltypen herstellbar sind. Ein einzelnes Mischgebinde kann also Artikel unterschiedlichen Typs umfassen, beispielweise zwei Saftflaschen, zwei Limonadeflaschen und eine Pralinenschachtel. Das Mischgebinde ist beispielsweise von einem Folienabschnitt umwickelt und wird von diesem zusammengehalten. Eine einzelne Palettenlage kann entsprechend ebenfalls Artikel unterschiedlichen Typs umfassen, beispielweise Saftflaschen, Limonadeflaschen und Pralinenschachteln.

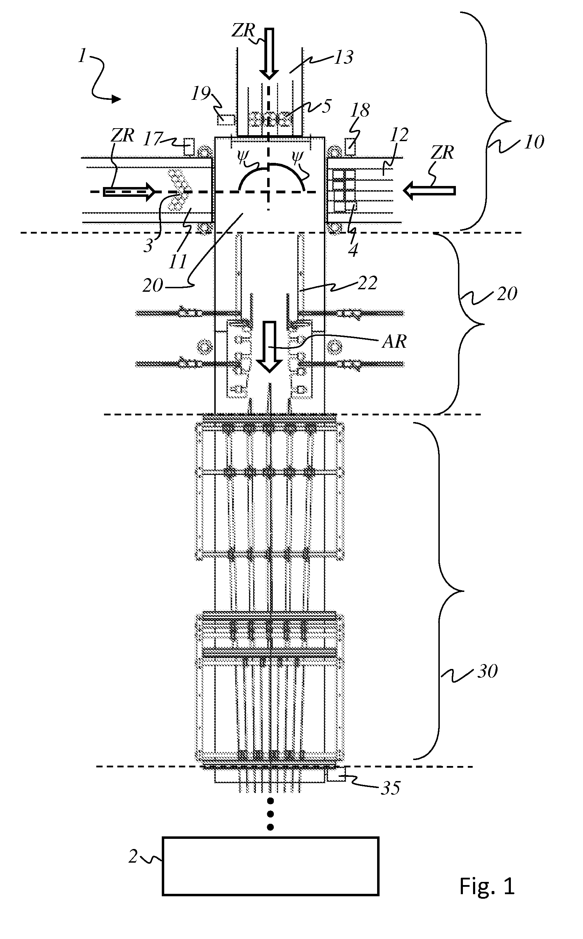

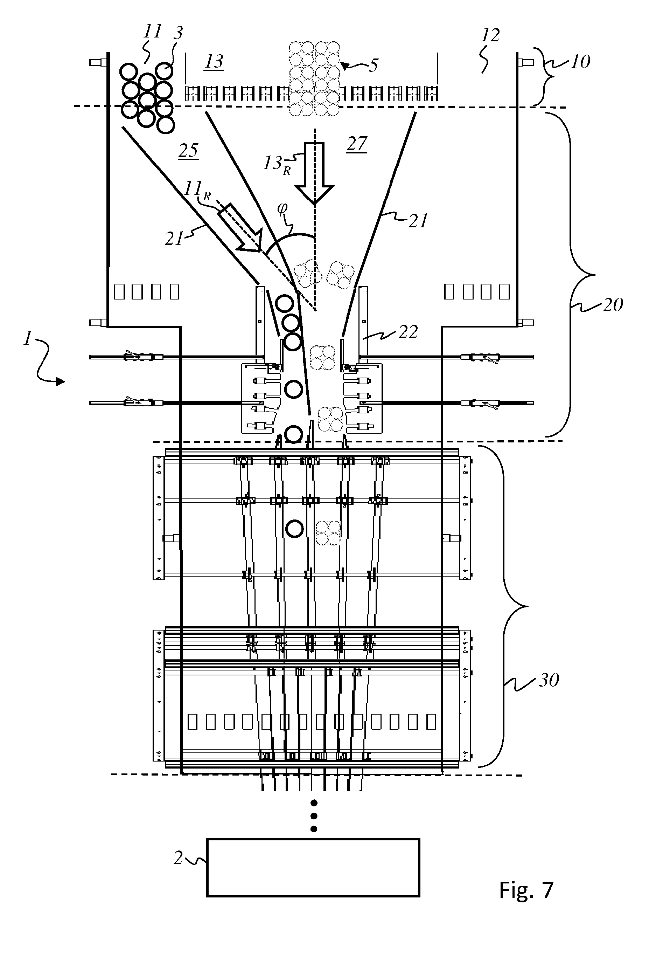

In einer Ausführungsform sind drei Transportbänder vorgesehen. In weiteren Ausführungsformen kann der Winkel zwischen je zwei benachbarten Transportbändern variiert werden, beispielsweise kann der Winkel 90 Grad sein. Alternativ können die Transportbänder parallel zueinander angeordnet sein. In einer bevorzugten Ausführungsform sind drei Transportbänder mit der Gassenzone rechtwinklig angeordnet (siehe Figuren 1 bis 6). So kann eine platzsparende Anordnung des Förderers mit der Weiterverarbeitungseinheit erreicht werden. In einer anderen bevorzugten Ausführungsform sind drei Transportbänder parallel zueinander angeordnet (siehe Figur 7). Auch hier ist eine platzsparende Anordnung des Förderers mit der Weiterverarbeitungseinheit erreicht. Beim erfinderischen Förderer sind jedoch unabhängig von der Lage bzw. den Winkeln der Transportbänder zueinander die Transportrichtungen zumindest in einem Bereich der Ordnungszone stets abgewinkelt.

In einer bevorzugten Ausführungsform ist jedem Transportband mindestens ein Element zur Dosierung und Steuerung zugeordnet, mit der die Artikel vom jeweiligen Transportband gesteuert und dosiert der Ordnungszone zugeführt werden. Die Elemente zur Dosierung und Steuerung können Motoren umfassen und sind bevorzugt derart einstellbar, dass entweder nur eines der Transportbänder aktiv Artikel zuführt und die anderen Transportbänder deaktiviert sind, oder dass mindestens zwei der Transportbänder aktiv Artikel zuführen. Im letzten Fall dienen die Elemente zur Dosierung und Steuerung somit der Konfiguration der oben beschriebenen Mischgebinde bzw. Mischpaletten. Alternativ oder zusätzlich kann das Element zur Dosierung und Steuerung mindestens eine Lichtschranke umfassen, die die Breite des Artikelstroms im Übergangsbereich vom jeweiligen Transportband zur Ordnungszone abtastet. Solch eine Lichtschranke wirkt auch auf die Drehzahl des jeweiligen Motors des jeweiligen Transportbands ein und stellt sicher, dass die Ordnungszone durch dieses Transportband bei jeder eingestellten Anlagenleistung gleichmäßig mit einem nahezu drucklosen Strom von Artikeln des zugehörigen Artikeltyps dieses Transportbands beschickt wird.

Der Ordnungszone ist eine Gassenzone nachgeordnet, von der aus die Artikel in Gassen nacheinander geordnet zur Weiterverarbeitungseinheit geführt werden.

Um die Artikel geordnet vom jeweiligen Transportband zur Ordnungszone und darauf die Artikel weiter geordnet zur Gassenzone führen zu können, können Führungsgeländer auf der Ordnungszone angeordnet sein. Die Führungsgeländer können beispielsweise auf der Ordnungszone verschiebbar und/oder in die Ordnungszone versenkbar und/oder auf die Ordnungszone aufsteckbar sein. Die Artikel werden beim Transport auf von den Führungsgeländern definierten Abschnitten der Ordnungszone geführt. Die Führungsgeländer sind linear und/oder kurvenförmig, so dass sie bündig an die Begrenzungen der jeweiligen Transportbänder und an die Begrenzungen der Gassenzone anschließen.

Ist in einem ersten Fall nur ein einziges Transportband aktiv, werden alle Artikel dieses Transportbands auf von den Führungsgeländern definierten Abschnitten auf der Ordnungszone geführt und die Artikel auf die Gassen der Gassenzone aufteilt. Alle bzw. mehrere Abschnitte der Ordnungszone können also für alle Artikel des einen Artikeltyps des aktiven Transportbands verwendet werden. Entsprechend können alle bzw. mehrere Gassen der Gassenzone für alle Artikel des einen Artikeltyps des aktiven Transportbands verwendet werden.

Sind dagegen in einem zweiten Fall mehrere Transportbänder aktiv, können Artikel unterschiedlichen Artikeltyps transportiert werden, je Transportband Artikel eines einzigen, unterschiedlichen Typs. Die Artikel werden dann auf den von den Führungsgeländern definierten Abschnitten getrennt nach dem jeweiligen Transportband bzw. Artikeltyp geführt. Jeder Abschnitt der Ordnungszone kann also einem anderen Artikeltyp zugeordnet werden. Jeweils mindestens eine Gasse der Gassenzone ist den Artikeln jeweils eines Artikeltyps zugeordnet. Anschließend werden aus den hintereinander geordnet und abhängig vom Artikeltyp getrennt in den Gassen der Gassenzone geförderten Artikel durch die Packmaschine Mischgebinde erstellt bzw. die Artikel werden durch den Palettierer zu Mischpaletten zusammen gestellt.

In beiden Fällen ist üblicherweise die Anzahl der Abschnitte auf der Ordnungszone, in denen die Artikel geführt werden, gleich der Anzahl der Gassen, in denen die Artikel zur Weiterverarbeitungseinheit geführt werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechend nicht immer den realen Größenverhältnissen, da einige Formen vereinfacht und andere Formen zur besseren Veranschaulichung vergrößert im Verhältnis zu anderen Elementen dargestellt sind. Es zeigen:
**Figur 1** eine schematische Draufsicht auf eine Ausführungsform des erfindungsgemäßen Förderers mit drei Transportbändern, die in einem 90 Grad Winkel zueinander angeordnet sind, wobei der Förderer inaktiv ist;
**Figur 2** einen Detailausschnitt des Förderers nach Figur 1, wobei Transportrichtungen dargestellt sind, die in einem Bereich der Ordnungszone zueinander unter einem Winkel geneigt sind;
**Figur 3** eine schematische Draufsicht auf den Förderer nach Figur 1, wobei nur das erste Transportband aktiv ist, das Artikel eines ersten Typs fördert;
**Figur 4** eine schematische Draufsicht auf den Förderer nach Figur 1, wobei nur das zweite Transportband aktiv ist, das Artikel eines zweiten Typs fördert;
**Figur 5** eine schematische Draufsicht auf den Förderer nach Figur 1, wobei nur das dritte Transportband aktiv ist, das Artikel eines dritten Typs fördert;
**Figur 6** eine schematische Draufsicht auf den Förderer nach Figur 1, wobei alle drei Transportbänder aktiv sind, so dass gleichzeitig die Artikel des ersten, zweiten, und dritten Typs gefördert werden; und
**Figur 7** eine schematische Draufsicht auf eine andere Ausführungsform des erfindungsgemäßen Förderers mit drei Transportbändern, die parallel zueinander angeordnet sind.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele da, wie die erfindungsgemäße Vorrichtung oder das erfindungsgemäße Verfahren ausgestaltet sein können und stellen keine abschließende Begrenzung dar.

**Figur 1** zeigt eine schematische Draufsicht auf eine bevorzugte Ausführungsform des erfindungsgemäßen Förderers 1. Eine Zuführeinheit 10 umfasst drei Transportbänder 11, 12, 13, die in einem 90 Grad Winkel ψ zueinander angeordnet sind. Der Förderer 1 befindet sich in einer Ausgangseinstellung und ist inaktiv. Daher sind Artikel 3, 4, 5 nur zur Veranschaulichung am Ende der jeweiligen Transportbänder 11, 12, 13 dargestellt. Die Artikel 3, 4, 5 werden, wenn der Förder 1 aktiv ist, jeweils in einer Zuförderrichtung ZR auf den Transportbändern 11, 12, 13 in Richtung einer Ordnungszone 20 gefördert und von dort weiter in Abförderrichtung AR auf der Gassenzone 30. In der Breite variabel einstellbare weitere Führungsgeländer 22 (Formleisten) können an den Seiten der Ordnungszone 20 angebracht sein.

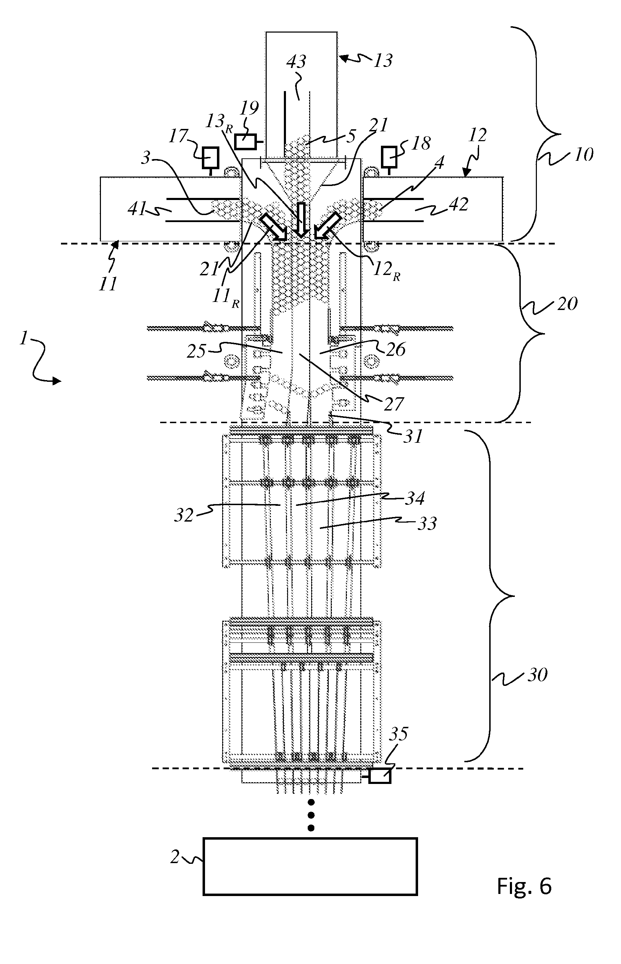

Die Transportbänder 11, 12, 13 sind üblicherweise abhängig von der Konfiguration der Artikel 3, 4, 5 konfiguriert, gegebenenfalls unterschiedlich, wie hier dargestellt. Auf dem ersten Transportband 11 werden beispielsweise in einem Massenstrom in einer einzigen breiten Gasse lose Behälter 3 (Artikel ersten Typs) transportiert, wenn das erste Transportband 11 aktiv ist. Auf einer Vielzahl von Gassen des zweiten Transportbands 12 werden beispielsweise Formbehälter 4 (Artikel zweiten Typs) transportiert, wenn das zweite Transportband 12 aktiv ist. Auf einer Vielzahl von Gassen des dritten Transportbands 13 werden beispielsweise Mehrstückverpackungen 5 (Artikel dritten Typs) transportiert, wenn das dritte Transportband 13 aktiv ist. Es ist selbstverständlich, dass die hier und in Figur 6 beschriebenen speziellen Artikeltypen keine Beschränkung der Erfindung darstellen.

Die weiteren Elemente werden in den nachfolgenden Figuren detailliert beschrieben.

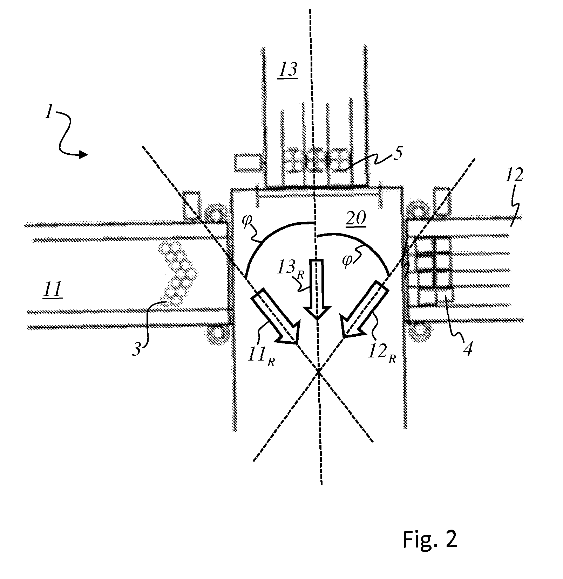

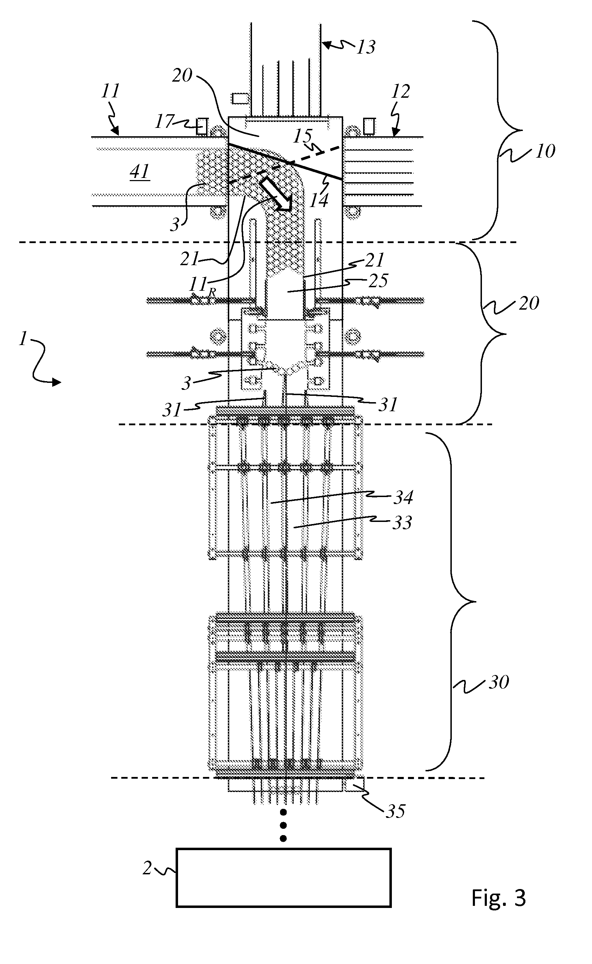

**Figur 2** zeigt einen Detailausschnitt des Förderers 1 nach Figur 1, wobei die Transportrichtungen 11_{R}, 12_{R}, 13_{R} für die Artikel 3, 4, 5 dargestellt sind, die in einem Bereich der Ordnungszone 20 zueinander unter einem Winkel geneigt sind. Die Transportrichtungen 11_{R} und 13_{R} sind in diesem Bereich unter einem Winkel ϕ zueinander angeordnet und die Transportrichtungen 13_{R} und 12_{R} sind in einem anderen Bereich der Ordnungszone 20 ebenfalls unter einem Winkel ϕ zueinander angeordnet. Die beiden Winkel ϕ können gleich oder unterschiedlich groß sein. In den nachfolgenden Figuren 3 bis 7 sind die Transportrichtungen 11_{R}, 12_{R}, 13_{R} und die zugehörigen Winkel ϕ aus Gründen der Übersichtlichkeit nur teilweise bzw. nicht dargestellt. Sie werden jedoch stets ausgebildet, sowohl bei aktivem als auch inaktivem Status der Transportbänder 11, 12, 13 und auch bei jeder möglichen Lage der Transportbänder 11, 12, 13 zueinander.

**Figur 3** zeigt eine schematische Draufsicht auf den Förderer 1 nach Figur 1, wobei nur das erste Transportband 11 aktiv ist und die losen Behälter 3 im Massenstrom einer einzigen breiten Gasse 41 des ersten Transportbands 11 fördert. Das zweite und dritte Transportband 12, 13 sind deaktiviert und fördern keine Artikel 4, 5 des zweiten bzw. dritten Artikeltyps.

Eine Dosierung und Steuerung für die losen Behälter 3 auf dem ersten Transportband 11 ist durch einen ersten Motor 17 und eine erste Lichtschranke 14 ermöglicht. Die erste Lichtschranke 14 tastet dabei die Breite des Behälterstroms im Übergangsbereich vom ersten Transportband 11 zur Ordnungszone 20 ab. Die erste Lichtschranke 14 wirkt auf die Drehzahl des ersten Motors 17 ein und stellt sicher, dass die Ordnungszone 20 durch das erste Transportband 11 bei jeder eingestellten Anlagenleistung gleichmäßig mit einem nahezu drucklosen Strom von losen Behältern 3 beschickt wird.

Eine zweite Lichtschranke 15 ist dem deaktivierten zweiten Transportband 12 zugeordnet und somit ebenfalls deaktiviert bzw. wird nicht ausgewertet (in Figur 1 sind die beiden Lichtschranken 14, 15 aus Gründen der Anschaulichkeit nicht dargestellt).

Zwei kurvenförmige Führungsgeländer 21 sind auf der Ordnungszone 20 angeordnet, entlang denen die losen Behälter 3 ausgehend von der Gasse 41 des einzig aktiven ersten Transportbands 11 auf der Ordnungszone 20 gelenkt werden. Dabei werden die losen Behälter 3 weiter im Massenstrom auf einem von den beiden Führungsgeländern 21 definierten ersten Abschnitt 25 der Ordnungszone 20 gefördert.

Am Ende der Ordnungszone 20 werden die losen Behälter 3 einzeln über drei Gassenteiler 31 in zwei Gassen 33 und 34 der Gassenzone 30 gelenkt und verteilt. Die übrigen Gassen der Gassenzone 30 werden bei der Ausführungsform nach Figur 3 nicht für den Transport der losen Behälter 3 genutzt.

Ein vierter Motor 35 am Ende der Gassenzone 30 regelt die Geschwindigkeit, mit der die losen Behälter 3 von den zwei Gassen 33 und 34 der Gassenzone 30 zu einer Weiterverarbeitungseinheit 2 gefördert werden. Die Weiterverarbeitungseinheit 2 verpackt die zugeförderten losen Behälter 3 zu Gebinden (nicht dargestellt), wenn die Weiterverarbeitungseinheit 2 eine Packmaschine ist, bzw. sie palettiert die zugeförderten losen Behälter 3, wenn die Weiterverarbeitungseinheit 2 ein Palettierer ist. Die Funktionsweise einer Packmaschine bzw. eines Palettierers ist hinlänglich aus dem Stand der Technik bekannt.

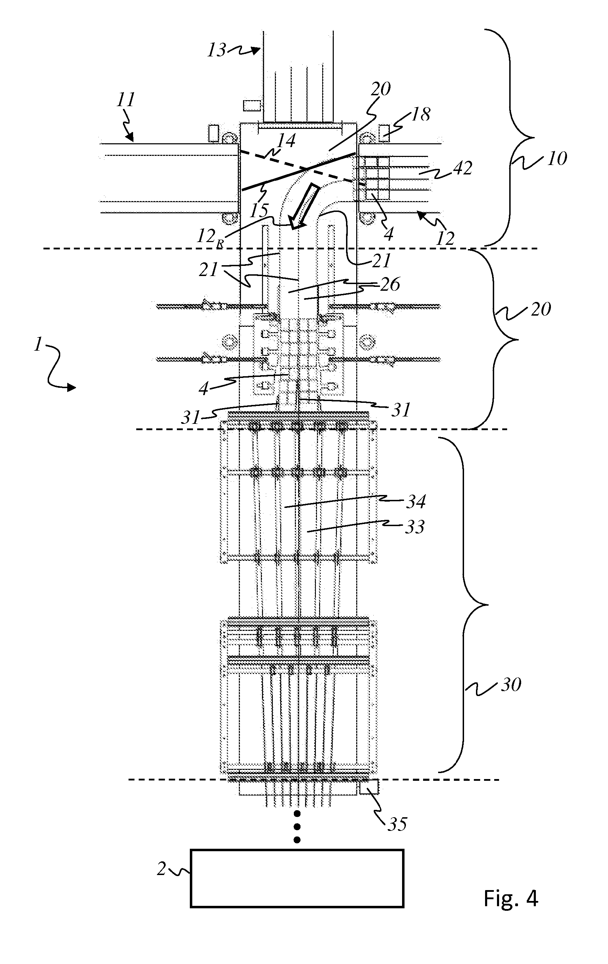

**Figur 4** zeigt eine schematische Draufsicht auf den Förderer 1 nach Figur 1, wobei nur das zweite Transportband 12 aktiv ist und die Formbehälter 4 in vier Gassen 42 des zweiten Transportbands 12 fördert. Das erste und dritte Transportband 11, 13 sind deaktiviert und fördern keine Artikel 3, 5 des ersten bzw. dritten Artikeltyps.

Eine Dosierung und Steuerung für die Formbehälter 4 erfolgt auf dem zweiten Transportband 12 durch einen zweiten Motor 18 und die zweite Lichtschranke 15, deren Funktionsweise bezüglich des Transports der Formbehälter 4 analog zu denen des ersten Motors 17 und der ersten Lichtschranke 14 ist, wie in Figur 3 beschrieben. Entsprechend werden auch die Formbehälter 4 vom zweiten Transportband 12 gesteuert und dosiert der Ordnungszone 20 zugeführt. Da das erste Transportband 11 deaktiviert ist, ist auch die erste Lichtschranke 14 nun deaktiviert bzw. wird nicht ausgewertet.

Drei kurvenförmige Führungsgeländer 21 sind auf der Ordnungszone 20 angeordnet, entlang denen die Formbehälter 4 ausgehend vom einzig aktiven zweiten Transportband 12 zur Ordnungszone 20 und auf der Ordnungszone 20 weiter zur Gassenzone 30 gelenkt werden. Dabei werden die Formbehälter 4 auf zwei von den drei Führungsgeländern 21 definierten zweiten Abschnitten 26 gefördert. Jeweils ein Paar von Formbehältern 4 aus zwei benachbarten Gassen 42 des zweiten Transportbands 12 werden also in den sich an diese beiden Gassen 42 anschließenden Abschnitt 26 geleitet.

Am Ende der Ordnungszone 20 werden die Formbehälter 4 einzeln über die drei Gassenteiler 31 in die zwei Gassen 33 und 34 der Gassenzone 30 gelenkt und verteilt. Die übrigen Gassen der Gassenzone 30 werden bei der Ausführungsform nach Figur 4 ebenfalls nicht für den Transport der Formbehälter 4 genutzt.

Der vierte Motor 35 am Ende der Gassenzone 30 regelt die Geschwindigkeit, mit der die Formbehälter 4 von den zwei Gassen 33 und 34 der Gassenzone 30 zur Weiterverarbeitungseinheit 2 gefördert werden. Die Weiterverarbeitungseinheit 2 verpackt die zugeförderten Formbehälter 4 zu Gebinden (nicht dargestellt) bzw. palettiert die zugeförderten Formbehälter 4.

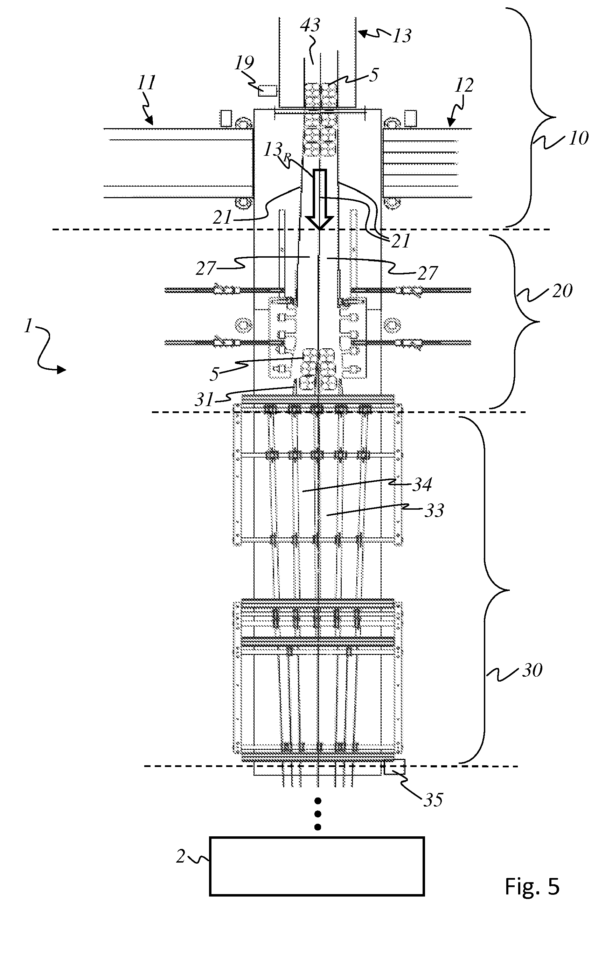

**Figur 5** zeigt eine schematische Draufsicht auf den Förderer 1 nach Figur 1, wobei nur das dritte Transportband 13 aktiv ist und die Mehrstückverpackungen 5 in zwei Gassen 43 des dritten Transportbands 13 fördert. In der hier dargestellten Ausführungsform ist eine einzelne Mehrstückverpackung 5 ein Gebinde aus vier losen Behältern. Das erste und zweite Transportband 11, 12 sind deaktiviert und fördern keine Artikel 3, 4 des ersten bzw. zweiten Artikeltyps.

Bei der Ausführungsform nach Figur 5 sind drei im Wesentlichen lineare Führungsgeländer 21 auf der Ordnungszone 20 angeordnet, entlang denen die Mehrstückverpackungen 5 ausgehend von den beiden Gassen 43 des dritten Transportbands 13 auf zwei von den Führungsgeländern 21 definierten dritten Abschnitten 27 der Ordnungszone 20 in die beiden Gassen 33 und 34 der Gassenzone 30 geführt werden.

Eine Dosierung und Steuerung für die Mehrstückverpackungen 5 erfolgt hier beim dritten Transportband 13 durch einen dritten Motor 19, der analog zu den ersten bzw. zweiten Motoren 17, 18 der Figuren 3 und 4 angeordnet ist. Zur Kontrolle einer gleichmäßigen Beschickung der dritten Abschnitte 27 mit einem nahezu drucklosen Strom von Mehrstückverpackungen 5 können auch die Lichtschranken 14, 15 verwendet werden (in Figur 5 aus Gründen der Anschaulichkeit nicht dargestellt). Die dritten Abschnitte 27 bilden im Wesentlichen einen linearen Weg für den Transport der Mehrstückverpackungen 5.

Insgesamt werden die Mehrstückverpackungen 5 durch den dritten Motor 19 und die Führungsgeländer 21 vom dritten Transportband 13 gesteuert und dosiert der Ordnungszone 20 zugeführt und darauf gesteuert und dosiert weiter zur Gassenzone 30 geführt.

Am Ende der Ordnungszone 20 werden die Mehrstückverpackungen 5 einzeln über die drei Gassenteiler 31 in die beiden Gassen 33, 34 der Gassenzone 30 gelenkt und verteilt. Der Motor 35 regelt die Geschwindigkeit, mit der die Mehrstückverpackungen 5 in den Gassen 33, 34 auf der Gassenzone 30 zur Weiterverarbeitungseinheit 2 gefördert werden, passend zur Geschwindigkeit auf dem Transportband 13 und der Ordnungszone 20.

Die Weiterverarbeitungseinheit 2 verpackt die zugeförderten Mehrstückverpackungen 5 zu Gebinden (nicht dargestellt) bzw. palettiert die zugeförderten Mehrstückverpackungen 5. **Figur 6** zeigt eine schematische Draufsicht auf den Förderer 1 nach Figur 1, wobei alle drei Transportbänder 11, 12, 13 aktiv sind. Das erste Transportband 11 fördert beispielsweise Orangenlimonade-Getränkeflaschen 3, das zweite Transportband 12 fördert beispielsweise Zitronenlimonade-Getränkeflaschen 4 und das dritte Transportband 13 fördert beispielsweise Cola-Getränkeflaschen 5 zur Ordnungszone 20. Die Artikel 3, 4, 5 der drei unterschiedlichen Artikeltypen werden gleichzeitig auf der Ordnungszone 20 gefördert, jedoch getrennt auf drei Abschnitten 25, 26, 27, die durch vier Führungsgeländer 21 getrennt sind. Wie oben beschrieben, ist jedem der Abschnitte 25, 26, 27 ein anderer Artikeltyp bzw. ein anderes Transportband 11, 12, 13 zugeordnet: auf dem ersten Abschnitt 25 werden die Artikel 3 des ersten Artikeltyps des ersten Transportbands 11 gefördert, auf dem zweiten Abschnitt 26 werden die Artikel 4 des zweiten Artikeltyps des zweiten Transportbands 12 gefördert und auf dem dritten Abschnitt 27 werden die Artikel 5 des dritten Artikeltyps des dritten Transportbands 13 gefördert.

Die Artikel 3, 4, 5 werden wiederum, wie ebenfalls oben beschrieben, über die drei Gassenteiler 31 getrennt nach Artikeltyp bzw. getrennt nach dem jeweiligen Transportband 11, 12, 13 von den drei Abschnitten 25, 26, 27 der Ordnungszone 20 in die Gassen 32, 33, 34 der Gassenzone 30 überführt: die Artikel 3 des ersten Artikeltyps werden vom ersten Abschnitt 25 in die erste Gasse 32 gefördert, die Artikel 4 des zweiten Artikeltyps werden vom zweiten Abschnitt 26 in die zweite Gasse 33 gefördert und die Artikel 5 des dritten Artikeltyps werden vom dritten Abschnitt 27 in die dritte Gasse 34 gefördert. Die übrigen Gassen der Gassenzone 30 werden bei der Ausführungsform nach Figur 6 ebenfalls nicht für den Transport der Artikel 3, 4, 5, genutzt.

Die Weiterverarbeitungseinheit 2 verpackt jeweils mindestens einen der Artikel 3, 4, 5 zu einem Mischgebinde zusammen (nicht dargestellt) bzw. stellt die Artikel 3, 4, 5 zu Paletten aus Mischpalettenlagen (nicht dargestellt) zusammen.

Figur 6 zeigt, dass unterschiedliche, jedoch stets vereinzelte Getränkeflaschen auf mehreren Transportbändern gleichzeitig zugeführt werden. Es ist selbstverständlich auch vorstellbar, dass auch bereits Mehrstückverpackungen auf einem oder mehr Transportbändern und auf anderen Transportbändern vereinzelte Artikel zugeführt werden, so dass man letztendlich eine sehr variable Gebindekonfiguration bzw. variable Beschickung der Paletten bzw. Palettenlagen mit der Weiterverarbeitungseinheit erhält.

**Figur 7** zeigt eine schematische Draufsicht auf eine andere Ausführungsform des erfindungsgemäßen Förderers 1 mit drei Transportbändern 11, 12, 13, die parallel zueinander angeordnet sind. Nur das erste und dritte Transportband 11, 13 sind aktiv, das zweite Transportband 12 ist deaktiviert. Die Transportrichtungen 11_{R} und 13_{R} zu den beiden aktiven Transportbändern 11, 13 sind in einem Bereich der Ordnungszone 20 unter einem Winkel ϕ zueinander angeordnet. Die sonstigen Elemente in Figur 7 sind bereits in den vorangehenden Figurenbeschreibungen beschrieben.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen. Insbesondere können zwei oder mehr als drei Transportbänder vorgesehen sein, die Formen der Artikel können für unterschiedliche Artikeltypen unterschiedlich sein, es können andere Elemente als Motoren und/oder Lichtschranken zur Dosierung und Steuerung vorgesehen sein, die Führungsgeländer können anders angeordnet sein als dargestellt, es kann eine andere Anzahl und/oder andere Konfiguration von Gassenteilern vorgesehen sein und die Artikel eines einzelnen Artikeltyps können auf mehr als eine Gasse der Gassenzone aufgeteilt werden, ohne den Schutzbereich der nachstehenden Ansprüche zu verlassen.

### Bezugszeichenliste:

- 1: Förderer
- 2: Weiterverarbeitungseinheit
- 3: Artikel eines ersten Artikeltyps
- 4: Artikel eines zweiten Artikeltyps
- 5: Artikel eines dritten Artikeltyps
- 10: Zuführeinheit
- 11: erstes Transportband
- 11_{R}: Transportrichtung auf der Ordnungszone bzgl. des ersten Transportbands
- 12: zweites Transportband
- 12_{R}: Transportrichtung auf der Ordnungszone bzgl. des zweiten Transportbands
- 13: drittes Transportband
- 13_{R}: Transportrichtung auf der Ordnungszone bzgl. des dritten Transportbands
- 14: erste Lichtschranke
- 15: zweite Lichtschranke
- 17: erster Motor
- 18: zweiter Motor
- 19: dritter Motor
- 20: Ordnungszone
- 21: Führungsgeländer
- 22: weiteres Führungsgeländer (Formleiste)
- 25: erster Abschnitt
- 26: zweiter Abschnitt
- 27: dritter Abschnitt
- 30: Gassenzone
- 31: Gassenteiler
- 32: erste Gasse
- 33: zweite Gasse
- 34: dritte Gasse
- 35: vierter Motor
- 41: Gasse des ersten Transportbands
- 42: Gasse des zweiten Transportbands
- 43: Gasse des dritten Transportbands
- ZR: Zuförderrichtung
- AR: Abförderrichtung
- ϕ: Winkel der Transportrichtungen in einem Bereich der Ordnungszone bzgl. je zwei benachbarter Transportbänder
- ψ: Winkel zwischen je zwei benachbarten Transport- bändern

## Patentansprüche

1. Förderer (1) zum Beschicken einer Weiterverarbeitungseinheit (2) mit Artikeln (3, 4, 5) mindestens zweier unterschiedlicher Artikeltypen, wobei der Förderer (1) eine Zuführeinheit (10) für die Artikel (3, 4, 5), eine der Zuführeinheit (10) nachgeordnete Ordnungszone (20) und eine der Ordnungszone (20) nachgeordnete Gassenzone (30) mit einer Vielzahl von Gassen (32, 33, 34) umfasst, wobei die Artikel (3, 4, 5) in der Gassenzone (30) zur Weiterverarbeitungseinheit (2) geordnet geführt sind, **dadurch gekennzeichnet, dass** die Zuführeinheit (10) mindestens zwei Transportbänder (11, 12, 13) umfasst, zu denen jeweils eine Transportrichtung (11_{R}, 12_{R}, 13_{R}) für die Artikel (3, 4, 5) in einem Bereich der Ordnungszone (20) derart ausgebildet ist, dass die Transportrichtungen (11_{R}, 12_{R}, 13_{R}) unter einem Winkel (ϕ) zueinander angeordnet sind.

2. Förderer (1) nach Anspruch 1, wobei drei Transportbänder (11, 12, 13) vorgesehen sind.

3. Förderer (1) nach einem der Ansprüche 1 bis 2, wobei mindestens zwei benachbarte Transportbänder (11, 12, 13) parallel angeordnet sind.

4. Förderer (1) nach einem der Ansprüche 1 bis 2, wobei je zwei benachbarte Transportbänder (11, 12, 13) in einem Winkel (ψ) zueinander angeordnet sind.

5. Förderer (1) nach Anspruch 4, wobei der Winkel (ψ) 90 Grad ist.

6. Förderer (1) nach einem der Ansprüche 1 bis 5, wobei jedem Transportband (11, 12, 13) Elemente zur Dosierung und Steuerung zugeordnet sind, mit denen die Artikel (3, 4, 5) vom jeweiligen Transportband (11, 12, 13) gesteuert und dosiert der Ordnungszone (20) zuführbar sind.

7. Förderer (1) nach Anspruch 6, wobei die Elemente zur Dosierung und Steuerung Motoren (17, 18, 19) und/oder Lichtschranken (14, 14) umfassen.

8. Förderer (1) nach einem der Ansprüche 6 bis 7, wobei die Elemente zur Dosierung und Steuerung derart einstellbar sind, dass nur eines der Transportbänder (11, 12, 13) aktiv Artikel (3, 4, 5) zuführt und die anderen Transportbänder (11, 12, 13) deaktiviert sind.

9. Förderer (1) nach Anspruch 8, wobei Führungsgeländer (21) auf der Ordnungszone (20) angeordnet sind, die die Artikel (3, 4, 5) ausgehend vom jeweiligen einzig aktiven Transportband (11, 12, 13) zur Ordnungszone (20) und auf der Ordnungszone (20) weiter zur Gassenzone (30) lenken, wobei die Artikel (3, 4, 5) auf von den Führungsgeländern (21) definierten Abschnitten (25, 26, 27) geführt sind.

10. Förderer (1) nach einem der Ansprüche 6 bis 9, wobei die Elemente zur Dosierung und Steuerung derart einstellbar sind, dass mindestens zwei der Transportbänder (11, 12, 13) aktiv Artikel (3, 4, 5) zuführen.

11. Förderer (1) nach Anspruch 10, wobei die Artikel (3, 4, 5) auf den von den Führungsgeländern (21) definierten Abschnitten (25, 26, 27) getrennt nach dem jeweiligen Transportband (11, 12, 13) geführt sind und jeweils mindestens eine Gasse (32, 33, 34) der Gassenzone (30) den Artikeln (3, 4, 5) jeweils eines der unterschiedlichen Artikeltypen zugeordnet ist.

12. Förderer (1) nach einem der Ansprüche 1 bis 11, wobei die Weiterverarbeitungseinheit (2) eine Packmaschine zum Herstellen von Gebinden aus den Artikeln (3, 4, 5) ist.

13. Förderer (1) nach Anspruch 12, wobei durch die Transportbänder (11, 12, 13) jeweils Artikel (3, 4, 5) unterschiedlichen Typs förderbar sind, so dass durch die Packmaschine (2) Mischgebinde aus den Artikeln (3, 4, 5) der unterschiedlichen Artikeltypen herstellbar sind.

14. Förderer (1) nach einem der Ansprüche 1 bis 11, wobei die Weiterverarbeitungseinheit (2) ein Palettierer für die Artikel (3, 4, 5) ist und wobei durch die Transportbänder (11, 12, 13) jeweils Artikel (3, 4, 5) unterschiedlichen Typs förderbar sind, so dass durch den Palettierer (2) Paletten aus Mischpalettenlagen aus den Artikeln (3, 4, 5) der unterschiedlichen Artikeltypen herstellbar sind.

15. Verfahren zum Beschicken einer Weiterverarbeitungseinheit (2) mit Artikeln (3, 4, 5) mindestens zweier unterschiedlicher Artikeltypen durch einen Förderer (1), wobei die Artikel (3, 4, 5) mit einer Zuführeinheit (10) des Förderers (1) zu einer Ordnungszone (20) des Förderers (1) und anschließend weiter zu einer Gassenzone (30) des Förderers (1) transportiert werden, wobei die Gassenzone (30) die Artikel (3, 4, 5) der Weiterverarbeitungseinheit (2) geordnet zuführt, **gekennzeichnet durch** die folgenden Schritte:
• Zuführen der Artikel (3, 4, 5) zur Ordnungszone (20) auf mindestens zwei Transportbändern (11, 12, 13), zu denen jeweils eine Transportrichtung (11_{R}, 12_{R}, 13_{R}) für die Artikel (3, 4, 5) in einem Bereich der Ordnungszone (20) derart ausgebildet wird, dass die Transportrichtungen (11_{R}, 12_{R}, 13_{R}) unter einem Winkel (ϕ) zueinander angeordnet sind;
• Gesteuertes Dosieren und Zuführen der Artikel (3, 4, 5) je Transportband (11, 12, 13) zur Ordnungszone (20), wobei jedem Transportband (11, 12, 13) mindestens ein Element zur Dosierung und Steuerung zugeordnet wird, um die verschiedenen Artikel (3, 4, 5) zu verarbeiten;
• Gesteuertes Führen der Artikel (3, 4, 5) auf der Ordnungszone (20), wobei die Artikel (3, 4, 5) auf von Führungsgeländern (21) definierten Abschnitten (25, 26, 27) getrennt nach dem jeweiligen Transportband (11, 12, 13) geführt werden; und
• wobei jeweils mindestens eine Gasse (32, 33, 34) der Gassenzone (30) den Artikeln (3, 4, 5) jeweils eines der unterschiedlichen Artikeltypen zugeordnet wird.
